# EUROPEAN PATENT APPLICATION

(11) **EP 1 605 714 A1**
(43) Date of publication of application: **14.12.2005**
(21) Application number: 05253186.0
(22) Date of filing: 24.05.2005
(51) Int. Cl.: H04Q 7/28

(54) **Indicating the non-establishment of a push-to-talk communication in a cellular network**

(30) Priority: 07.06.2004 US 862785
(71) Applicant: LUCENT TECHNOLOGIES INC., Murray Hill, New Jersey 07974-0636 (US)
(72) Inventor: Hiller, Thomas Lloyd, Chicago, IL 60661 (US); Rossetti, David Albert, Randolph, NJ 07869 (US)
(74) Representative: Sarup, David Alexander

(57) **Abstract**

A push-to-talk over cellular (PoC) system is provided in which a negative indication-to-speak may be delivered to a requesting unit when the requested wireless unit is not available. In one embodiment of the instant invention, a first wireless unit is paged in response to receiving a request from the second wireless unit to transmit a message to the first wireless unit. A page response signal is received from the first wireless unit, and the negative indication-to-speak to the second wireless unit is delivered to the second wireless unit in response to receiving the page response signal.

## Description

### BACKGROUND OF THE INVENTION

### 1. FIELD OF THE INVENTION

This invention relates generally to a communications system that provides a one-to-many conference mode, and, more particularly, to a method for providing a low-latency, high-accuracy negative indication-to-speak in a push-to-talk over cellular (PoC) system.

### 2. DESCRIPTION OF THE RELATED ART

Generally, PoC systems provide a one-to-many transmission mode that is similar to a conventional police or fire radio system, which are typically wireless. In an analog system with a single base station, a first user captures the base station by an initial transmission, which is activated by a push-to-talk button. The first user's voice transmission is received by the base station and retransmitted to the other users. The transmission by the first user ends when the first user releases the push-to-talk button. This allows one of the other users to reply to the first user or initiate a new transmission by activating his/her radio with the push-to-talk button. Latency to speak, which is the amount of time before a user may speak after pressing the talk button, is relatively minimal in these types of systems.

In a packet data based PoC system, information is transmitted in packets. Speech is carried in digitized samples within these packets. There are two categories of signaling messages; both are carried in packets. One category of signaling conveys a request for users to join a PoC call, either a new or ongoing call. This category may include negotiation of codecs, IP addresses, UDP ports, and the like. The second category of signaling enables a user to request to speak, and other users to receive an indication to listen. Users use the second category of signaling to arrange volleys of speech back and forth, with one user speaking at a time.

In many wireless systems, a mobile station typically does not have a continuously active over-the-air connection to the wireless network, but rather, periodically connects with the network and exchanges packets. Being continuously connected to the wireless network negatively impacts both the battery lifetime of the mobile station and the utilization of wireless resources relative to other users. Because of this, the wireless network typically releases over-the-air connections to the mobile station after a short idle time following the mobile station's or wireless network's last data bit is sent. When the Wireless network has one or more packets to send the mobile station, it pages and locates the mobile, and reconnects the mobile. Similarly, if the mobile has a packet to send, the mobile station signals the wireless network and reconnects itself, and then sends the packet. This reconnection adds significant latency to the transfer of PoC signaling messages, which is an addition to the latency to transfer PoC signaling messages between the mobile station and wireless network via over-the-air connections. Significant indication-to-speak latency to a calling user is a problematic issue in PoC systems. Users may have an urgent need to speak to other users, or significant latency may be viewed as a design flaw.

While significant latency is an undesirable issue in PoC systems, there is a countervailing need to provide accurate indications for the user to speak. For example, false indications-to-speak result in the user having to repeat his/her speech later on another call attempt. In fact, some users could become wary of inaccurate indications-to-speak, and learn to first verify that someone is actually listening despite an indication-to-speak, thereby detracting from the overall user experience of PoC service.

One latency reduction solution practiced in the art is the use of an unconfirmed indication-to-speak [OMA-AD]. In an unconfirmed indication-to-speak, the wireless network provides an indication to the requesting mobile station that one or more destination mobile stations are ready to receive media before signaling at least one destination user to verify it can accept an incoming PoC call. As the calling user speaks in response to an unconfirmed indication-to-speak, the wireless network buffers the speaker's voice packets.

When a given destination mobile already has an over-the-air connection (commonly referred to as an "active" mobile), then the wireless network sends PoC signaling to the mobile to request it join in the call and accept the voice packets. When the mobile responds with PoC signaling that it desires the call, the wireless network releases the buffered speech to the user.

If instead, the called mobile station does not have an over-the-air connection (commonly referred to as a "dormant" mobile), the wireless network attempts to locate and page the called mobile station(s). When a destination mobile station responds to a page, the wireless network connects or reconnects that destination user's mobile station via an overthe-air connection, and sends the PoC signaling message to the mobile station via the newly established over-the-air connection. When the mobile station responds to the PoC signaling, the wireless network releases the buffered speech to the destination mobile station. As other mobile stations respond to pages, they are likewise reconnected, receive PoC signaling, respond, and receive speech.

One technique practiced in the art is to have the wireless network periodically poll the mobile station to assure that the wireless network is able to locate the mobile and establish an over-the-air connection to the mobile station. This improves the probability that the mobile station can respond to incoming PoC call signaling, thereby improving the accuracy of the unconfirmed indication-to-speak. This periodic polling, however, is undesirable in that it taxes radio resources. Additionally, at least one other shortcoming of the unconfirmed indication-to-speak is that the accuracy of the indication-to-speak depends on the accuracy of the state information regarding destination mobiles, which is difficult or impossible to maintain with high accuracy.

For users that require a highly accurate indication-to-speak, there is another solution practiced in the art of PoC called the confirmed indication-to-speak. In the confirmed indication-to-speak, the wireless network does not provide an indication-to-speak until the mobile station successfully receives and responds by sending PoC signaling, thereby accepting the incoming PoC call. In this case, the mobile station is inherently reachable by radio and ready to receive speech packets from the requesting user. Thus, there is no need for the wireless network to buffer the speaker's media. Unfortunately, as outlined above, the calling user now suffers a greater latency of the indication-to-speak. Therefore, the accuracy of the confirmed indication-to-speak is improved at the expense of latency of indication-to-speak, which increases undesirably from the point of view of the calling user.

As described above, the mobile station may not be able to respond to PoC signaling simply due to not being in the radio coverage area of the wireless network. However, in currently deployed wireless networks, there are also many other reasons for a mobile station to not be able to respond to PoC signaling, or for the wireless network to not be able support a PoC call, even when the mobile station is within radio coverage of the wireless network. Such reasons include the mobile station being involved in another service and not being able to simultaneously support PoC and that other service, the radio spectrum resources being exhausted and unable to support a PoC bearer for signaling or media (voice), the mobile station or the wireless network lacking internal resources to support a PoC call, or other reasons. These cases inherently differ from the case of the mobile station not being in radio coverage because the mobile is in radio coverage, and the knowledge exists either in the remote terminating part of the wireless network or the terminating mobile that the PoC cannot be established.

For the case of the unconfirmed indication-to-speak technique, the inability of the network or mobile station to establish a PoC call despite the mobile station being in radio coverage of the wireless network has a similar outcome to the mobile station not being in radio coverage: The wireless network that supports the originating mobile station should provide an indication to the user to cease speaking, or possibly directing the user to a called party's voice mail, and otherwise abandon the PoC call. This is, of course, after the wireless network had given the calling PoC user an indication that at least one terminating mobile station was ready to receive the caller's speech.

For the case of the confirmed indication-to-speak technique, the wireless network does not provide the calling mobile station with an indication to speak. Instead, the calling mobile station is kept waiting for the call to establish only to discover the PoC cannot be established. The amount of time the calling mobile station should wait until the wireless network provides an indication that the call cannot be established depends on a summation of latencies that involve paging the mobile station in a usefully enough wide area, latencies for a reasonable number of network elements operating under load to process PoC signaling, and time to retransmit signaling packets that are lost due to errors. The latter includes retransmission over the air.

Thus, it is desirable to provide accurate indications with low latency of when a PoC caller should not wait for an indication to speak (i. e., to abandon the PoC call) when the wireless network or mobile station knows it will not be possible to establish a requested PoC call. Generally, for PoC calls to multiple users, the wireless network should only provide such indications to abandon the call when a PoC call cannot be established to any of the users.

The present invention is directed to overcoming, or at least reducing, the effects of, one or more of the problems set forth above.

### SUMMARY OF THE INVENTION

In one aspect of the present invention, a method of communication with a first wireless unit is provided. The method, comprises receiving a request from a second wireless unit to transmit a message to the first wireless unit. A negative indication-to-speak to the second wireless unit is provided in response to determining that the first wireless unit is unable to receive the message.

In another aspect of the present invention, a method of communicating with a first wireless unit is provided. The method, comprises delivering a request to transmit a message to the first wireless unit. A negative page-event indication-to-speak is then delivered.

In yet another aspect of the present invention, an apparatus for controlling communications between a first and a second wireless unit is provided. The apparatus comprises a network adapted to page the first mobile station in response to receiving a request from the second mobile station to transmit a message to the second mobile station. A page response signal is received from the first mobile station, and a negative indication-to-speak to the second mobile station is provided in response to determining that the first wireless unit is unable to receive the message.

### BRIEF DESCRIPTION OF THE DRAWINGS

The invention may be understood by reference to the following description taken in conjunction with the accompanying drawings, in which like reference numerals identify like elements, and in which:
Figure 1 illustrates a block diagram of a Packet Data Wireless Network;
Figure 2 illustrates a call scenario of a Direct Page-Event Operation of the network illustrated in Figure 1;
Figure 3 illustrates a call scenario of an Indirect Page-Event Indication Subscription Operation;
Figure 4 illustrates a call scenario of an Indirect Page-Event Indication Operation;
Figure 5 illustrates a typical call scenario in which a direct negative page-event indication-to-speak may occur;
Figure 6 illustrates a call scenario in which a direct negative page-event indication-to-speak may occur after a page response is received;
Figure 7 illustrates a typical call scenario in which an indirect negative page-event indication-to-speak may occur; and
Figure 8 shows a Mobile Data Network sending a page request to mobile station.

While the invention is susceptible to various modifications and alternative forms, specific embodiments thereof have been shown by way of example in the drawings and are herein described in detail. It should be understood, however, that the description herein of specific embodiments is not intended to limit the invention to the particular forms disclosed, but on the contrary, the intention is to cover all modifications, equivalents, and alternatives falling within the spirit and scope of the invention as defined by the appended claims.

### DETAILED DESCRIPTION OF SPECIFIC EMBODIMENTS

Illustrative embodiments of the invention are described below. In the interest of clarity, not all features of an actual implementation are described in this specification. It will of course be appreciated that in the development of any such actual embodiment, numerous implementation-specific decisions should be made to achieve the developers' specific goals, such as compliance with system-related and business-related constraints, which will vary from one implementation to another. Moreover, it will be appreciated that such a development effort might be complex and time-consuming, but would nevertheless be a routine undertaking for those of ordinary skill in the art having the benefit of this disclosure.

The invention herein advances the state of the art by providing an indication-to-speak that has latency comparable to the unconfirmed indication-to-speak and accuracy comparable to the confirmed indication-to-speak. In addition, this invention also provides a low latency and high accuracy indication to abandon the PoC call when the mobile or wireless network possesses information that the PoC cannot be established to all of the participants requested.

Generally, there are three components involved in a decision to provide the calling user with an indication-to-speak. These are: 1) the willingness of the called user or users to accept a PoC call or request to speak from the calling user; 2) the wireless network being able to locate the mobile; and 3) the wireless network being able to establish a connection or connections, as necessary, to carry PoC signaling and media (speech).

The first item, the willingness of the destination user or users to accept a PoC call, means that the called user has set a parameter in a (presence) server in the wireless network that indicates he or she is willing to receive a call and listen to speech transmitted from the calling user. Note that if the PoC call has previously been established, but the called mobile is dormant, then this request represents a continuation of the call and a request to listen to the speech of the calling user. The parameter the called user sets is typically defined by protocol regimes known as "presence." Presence parameters are well known to those of ordinary skill in the art, and consequently are not disclosed in detail herein. Generally, presence parameters or settings are set by the user to define himself or herself as being present relative to some callers and not present relative to others. For purposes of describing the disclosed embodiments of the instant invention, it is hereafter assumed that the user desires to receive PoC calls.

The second item, the wireless network being able to locate the user, means that the wireless network is able to page the mobile and the mobile is able to respond to the page. As such, the mobile is within radio coverage of the wireless network; otherwise the mobile station would not be able to receive and respond to the page.

The third item, the wireless network being able to establish a connection, means that the wireless network is able to establish an over-the-air connection or set of connections as necessary for the wireless network and the mobile station to exchange PoC messages and media. Generally, but not always, if the mobile station is able to respond to a page message from the wireless network, then the wireless network and mobile station will be able to establish an over-the-air connection or connections, which are used to exchange PoC signaling and media. This is because the mobile station is inherently in radio contact with the wireless network if it is able to receive and respond to a page. However, the radio resources used for the page and the radio resources used for the over-the-air connections that the mobile station 104 and wireless network use to exchange PoC signaling messages and media are not necessarily identical. Therefore, it is possible that mobile station is able to respond to a page from the wireless network, but not be able to establish such connections. By way of example, field experience in cdma2000 is that this happens about 2% of the time, if the cause is solely due to lack of radio resource causes.

Continuing on to the third item, in addition to lack of radio resources, there are other kinds of resources, such as wireless network system and mobile resources, that may be exhausted, or may have limitations that prevent the establishment of a PoC call due to the mobile station already being engaged in other activities. Because these latter kinds of system limitations are highly dependent on the actual wireless network deployment in a geographical area, including possibly the version of the system hardware and software, as well as dependent on the capabilities of a given mobile station that can engage in other activities simultaneously, it is not possible to cite an accurate probability that the mobile station can or could answer a page and yet it is not possible to establish a PoC call. For example, if a mobile station or wireless network cannot support an ordinary circuit voice call and a PoC call simultaneously, then the probability that the mobile can respond to a page but not support a PoC call would also depend on how often the user of the mobile is engaged in circuit voice calls. As such, the probability is inherently not dependent on radio resources.

In one embodiment of the instant invention a page response from a dormant destination mobile station is used to trigger an indication to the calling user to speak. Because this technique proves the mobile station is within radio coverage, it is more accurate than simply guessing the mobile station is connected and able to receive an incoming call, or does not require costly (and generally infeasible) polling to maintain a high accuracy state upon which to make an accurate guess. On the other hand, because this technique does not require the mobile station to establish a connection and then receive PoC signaling over that connection, this technique has lower latency than the confirmed indication-to-speak approach.

In another embodiment of the instant invention, if the wireless network possesses knowledge that it will not be possible to establish a PoC call for reasons such as it is aware that the mobile station is engaged in some other activity that prevents the mobile station from accepting and establishing the PoC call, or the RAN not being able to support both PoC and the other activity simultaneously, or is otherwise aware the mobile station cannot support the PoC call, then the arrival of PoC signaling at the wireless network for the mobile station is used to trigger an indication to the calling user to abandon the PoC call. Furthermore, as cited above there is typically a 2% chance that the mobile station answers a page and it will not be possible to establish the PoC call due to radio resources being exhausted; this too triggers an indication to the calling user to abandon the PoC call. The wireless network may possess such knowledge before it sends the page or may acquire it when it receives the page response from the mobile station. Similarly, if the mobile station receives a page and possesses knowledge that the page is for a PoC call, and possesses knowledge that it will not be possible to establish a PoC call because it is engaged in other activities and cannot support a PoC call simultaneously with those other activities, or cannot support the PoC call for yet other reasons, then the arrival of PoC signaling to the mobile station from the wireless network is used to trigger an indication to the calling user to not speak, *i*.*e*., to abandon the PoC call. Because this technique conveys an indication that the wireless network and/or the mobile station cannot support a PoC call, it has lower latency than simply waiting for a timeout to occur due to a PoC signaling response from the mobile station not arriving; nor does it require costly (and generally infeasible) polling to maintain a high accuracy state upon which to make an accurate guess that it will not be possible to establish a PoC call. Also, because this technique does not require the mobile station to establish an over-the-air connection, receive PoC signaling over that connection, process the signaling, and then respond that the mobile station cannot support a PoC call, this technique therefore has lower latency than the receiving signaling from the mobile station indicating that the mobile station is declining the PoC call.

The system described herein differs from the unconfirmed indication-to-speak and the confirmed indication-to-speak, defining a third and new type of indication-to-speak, which will be generally referred to as the page-event confirmed indication-to-speak, and is discussed more fully below. The page-event confirmed indication-to-speak differs from the confirmed and unconfirmed indications-to-speak in the current state of the art, such as found in [OMA-AD], as it provides an indication-to-speak by accurately confirming the user is within radio reach, yet does not have infeasible polling nor the latency of establishing connections and sending and receiving PoC messages. Furthermore, with the page-event confirmed indication-to-speak, the calling user also does not suffer additional latency due to the mobile station having to process PoC signaling associated with an incoming call.

Similarly, the system described herein differs from the unconfirmed indication-to-speak and the confirmed indication-to-speak for PoC calls that cannot be established when the wireless network or mobile possess knowledge before sending the page or after receiving the page response that the PoC cannot be established by defining a companion indication-to-speak that conveys a negative outcome, which will be generally referred to as the negative page-event confirmed indication-to-speak, and is discussed more fully below. The negative page-event confirmed indication-to-speak differs from the confirmed and unconfirmed indications-to-speak in the current state of the art, such as found in [OMA-AD], as it provides an indication to the calling user to abandon the PoC call by accurately confirming that the wireless network and mobile station will not be able to establish a PoC call, yet does not have infeasible polling of the mobile to maintain a status of the mobile's ability to establish a PoC call, nor the latency associated with the expiration of a timer that serves to detect a failure PoC signaling response from the mobile station, nor the latency of establishing connections and sending and receiving PoC messages to receive PoC signaling only to learn the PoC call cannot be established. Furthermore, with the negative page-event confirmed indication-to-speak, the calling user also does not suffer additional latency due to the mobile station having to process PoC signaling associated with an incoming call, also to only send back a response that the mobile cannot establish or support a PoC call.

Unless specifically stated otherwise, or as is apparent from the discussion, terms such as "processing" or "computing" or "calculating" or "determining" or "displaying" or the like, refer to the action and processes of a computer system, a digital data processor, a digital signal processor, an integrated circuit (*e*.*g*., an application-specific integrated circuit (ASIC) or a Field Programmable Gate Array (FPGA)), or similar electronic computing device, that manipulates and transforms data represented as physical, electronic quantities within the computer system's registers and memories into other data similarly represented as physical quantities within the computer system's memories or registers or other such information storage, transmission or display devices.

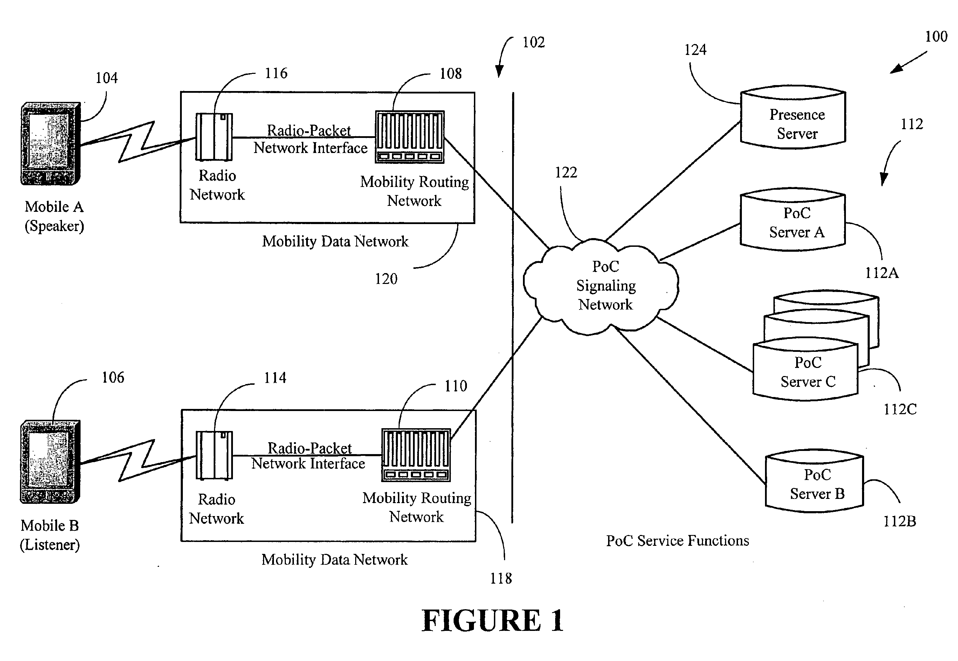

Turning now to the drawings, and specifically referring to Figure 1, a communications system 100 is illustrated, in accordance with one embodiment of the present invention. Figure 1 generally depicts components that that may be used within an exemplary packet data wireless network 102 that supports a PoC system. One network provider or multiple network service providers may own or service the entire network. The number of service providers does not impact the description of the various embodiments of the instant invention disclosed herein.

The exemplary network 102 may include one or more Mobility Routing Networks 108, 110, which provide mobile stations 104, 106 with an Internet Protocol (IP) address that is persistent as the mobile station 104, 106 moves. Examples of Mobility Routing Networks are IS835, GPRS and the like. If the Mobility Routing Network 108, 110 is unable to maintain the IP address due to movement of the mobile station 104, 106 to a "remote" geographical location, then the mobile station 104, 106 may be assigned a new IP address by the Mobility Routing Network 108, 110, which updates PoC Servers 112 with the new IP address. In addition, some Mobility Routing Networks have the ability to send presence notifications when the mobile station 104, 106 acquires an IP address or other events occur.

A Radio Network 114, 116 is coupled to the mobility routing network 108, 110 and functions to provide the mobile stations 104, 106 with radio connections and limited mobility within some serving area. Exemplary radio networks may include IS2000, GSM, UMTS, and the like. The Mobility Routing Network 108, 110 and the Radio Network 114,116 together form a Mobile Data Network 118, 120, as depicted in Figure 1.

When the mobile station 104, 106 has an active connection, the Radio Network 114, 116 within the Mobile Data Network 118, 120 simply delivers the packet to the mobile station 104, 106. However, if the mobile station 104, 106 is dormant, *i.e.*, it has no over-the-air connection, the Mobility Routing Network 108, 110 delivers the packet to the Radio Network 114, 116, which pages the mobile station 104, 106. This triggers the establishment of an over-the-air connection between the Radio Network 114, 116 and the mobile station 104, 106. The packet may now be delivered via the over-the-air connection. As stated above, it may be for some Wireless network regimes that more than one over-the-air connection is required for PoC service.

A capability of some Mobile Data Networks 118, 120 is the ability of the mobile station 104, 106 to establish one or more packet filters that allow the Mobile Data Network 118, 120 to recognize certain packets and perform an action upon the recognition of such packets. Packet filters may recognize specific packet types by IP address or address range or port number or port number range, or type of protocol carried in the packet, or differentiated services field, or security Parameter Index (SPI) field, etc., see IS835 and GPRS for more detailed examples. It is possible to specify packet filters that act on inner packet layers for the case of tunneled packet, where a tunneled packet implies that the overall packet carries an inner packet. That inner packet is sometimes said to be "encapsulated." A common use of the packet filters is to recognize certain packets and send them over a particular over-the-air connection that provides a particular quality of service or specialized compression. It is also possible for the network operator to administratively configure packet filters on behalf of the mobile station instead of the mobile station having to actively perform this function. In some situations this may be advantageous as it simplifies the mobile station design, possibly rendering them less expensive or available sooner.

In the illustrated embodiment, a Signaling Network 122 provides PoC signaling message connectivity between the PoC servers 112 and the mobility data network 118, 120. In at least some applications, the signaling network 122 allocates and assigns a particular one of the PoC servers 112 to a particular one of the mobile stations 104, 106. As explained above, there are two categories of signaling messages in a PoC system. Both are carried in packets. One category of signaling requests users to join a PoC call as well as initiates the call. The second category of signaling enables a user to request to speak while other users receive an indication on the call to only listen. This second type of signaling provides an arbitration function if two users request to speak generally simultaneously. Because PoC signaling is carried in packets, the filters discussed in the previous paragraph can recognize PoC signaling.

The Signaling Network 122 may act in two different modes. In the first mode, the signaling network simply acts as an IP network, transferring packets between the mobile station 104, 106 and the PoC server 112. In this case, the packet arrives at the PoC server 112 or the mobile station 104, 106 unchanged as it traverse the signaling network 122. In particular, the Mobile Data Network 118, 120 is able to determine the IP address of the PoC server 112 that sent the PoC signaling. From the point of view of the instant invention, the Signaling Network 122 is transparent to the PoC signaling messages. From the point of the instant invention, if some set of entities or other components not shown in the wireless network, which supports the PoC system, changes the IP address of the signaling packets to a new address, then these same components are able to remap that new address to the original address. The Signaling Network is defined to act as an IP network and is substantially transparent to the PoC signaling. Any such remapping techniques are not pertinent to the instant invention, as they do not affect the principles or operation of the invention herein.

In the second mode of signaling transport, entities within the Signaling Network 122 provide routing and forwarding based on signaling addresses of the signaling messages that are distinctly different than IP addresses. Entities within the Signaling Network 122 may also provide security and compression services to the PoC system, as well as have protocol layers that provide retransmission of signaling messages. The entities within the Signaling Network 122 themselves rely on the IP network as a transport layer. As the Signaling Network entities route and forward the PoC signaling, signaling specific components of the packet, such as the IP address of the packet are altered. The Signaling Network 122 does not inspect nor alter the PoC call specific components of the PoC signaling packets, e.g., who is being called or the codec type desired for the call, even though the Signaling Network 122 does affect non PoC call specific components of the signaling messages. Importantly, from the point of view of the mobile station 104, 106 and the Mobile Data Network 118,120, in this mode of signaling transport, a signaling packet appears to be sent by the last signaling entity within the Signaling Network 122, *i. e.,* it does not have the IP address of the PoC server 112 that sent the PoC signaling.

The PoC Servers 112 of Figure 1 provide the PoC call control functionality, and perform functions such as expanding nicknames or group names to actual individuals, authenticating and authorizing users to be able to place PoC calls to other PoC users, performing allocation of UDP ports, media duplication or control of media duplication, and other functions. Those skilled in the art will appreciate that the exact arrangement or number of PoC Servers 112 is not central to the instant invention, and may vary widely without departing from the spirit and scope of the instant invention.

Presence servers 124 provide services related to PoC. One use of the presence server 124 is the storage of user status that indicates whether the user desires, or does not desire, other users, or particular users to call. From the point of view of the instant invention, it is not necessary for the presence server 124 to utilize the same signaling protocols that the PoC servers 112 use. However, quite often this will be the case in commonly deployed wireless networks that support PoC systems. Those skilled in the art will appreciate that whether the presence servers use the same protocols or not as the PoC signaling, does not impact the instant invention, and thus is not discussed in greater detail herein so as to avoid unnecessarily obscuring the instant invention.

The arrangement of entities or components described in Figure 1 represents one embodiment of a wireless network that may advantageously employ at least some of the aspects of the instant invention. Not shown, but assumed, is an underlying IP network that provides for the transport of IP packets between the entities. This IP network also transports media packets that carry user speech. Furthermore, the exact IP transport envelope and transport protocol may vary from interface to interface; for example the messages may be encapsulated in PPP over-the-air. The exact transport envelope and transport protocol may vary from application to application without departing from the spirit and scope of the instant invention.

In the embodiment described herein, two classes of page-event indications may be employed. First, a direct page-event indication-to-speak may be used. The Mobility Data Network 118, 120 sends a page-event indication message to the PoC server 112 that sent the PoC signaling. The Mobility Data Network 118, 120 has access to, or is able to determine, the IP address of the PoC server that sent the signaling and uses that IP address for this purpose.

Alternatively, an indirect page-event indication-to-speak may be used. The Mobility Data Network 118, 120 sends a page-event indication-to-speak via intermediary entities that notify the PoC server 112 that sent the PoC signaling. The Mobility Data Network 118, 120 does not have access to the IP address of the PoC server 112 that sent the signaling. The PoC servers 112 and intermediary entities use non IP address identifiers to determine the PoC server 112 that sent the signaling. These entities may further operate on the page-event indication-to-speak prior to delivering a page-event indication-to-speak message to the PoC server, changing the underlying protocol of the page-event indication-to-speak along the way. From the point of view of this invention, the precise protocol type of the page-event indication-to-speak does not affect the principles of the instant invention.

As discussed above, in some wireless networks the Signaling Network 122 of Figure 1 changes that IP address of some or all PoC signaling messages. If the PoC Signaling Network 122 also encrypts and/or compresses the PoC signaling messages, the PoC Signaling Network 122 simply may not be able to determine the IP address of the PoC Server 112. In this case, the direct page-event indication operation would not be applicable and the indirect page-event operation would be used.

Both indirect and direct page-event indications may optionally contain a copy of the PoC signaling message that the Mobile Data Network filters recognized. At a minimum, the indications contain enough information for the PoC server 112 to identify the called mobile station 104, 106. The advantageous form of this mechanism is that there is enough information in the page-event indication-to-speak for the PoC server 112 to identify the exact signaling message that the filter recognized.

In some deployments, it may be sufficient for the PoC Signaling Network 122 to temporarily correlate the arrival of a page-event indication-to-speak for a mobile station with a most recent PoC signaling message sent to that mobile station. For example if there is only one such signaling message sent, and a page-event indication arrives at the PoC Signaling Network 122 from the Mobility Data Network 118, 120 one second after the PoC signaling was sent to the called mobile station, this usually is sufficient to identify the PoC signaling message to which the page-event indication applies.

In one embodiment of the instant invention, three methods by which the Mobility Data Network 118, 120 determines the IP address of the sending PoC server 112 from the PoC signaling are described. The first method uses the Mobility Data Network 118, 120 to examine the source IP address of the PoC signaling packet, which from the point of view of IP routing may be termed as the address of the correspondent node. That is, the PoC server 112 that sent the PoC signaling is a correspondent node. Thus, this source IP address is also termed correspondent node address. In some transport arrangements involving tunneling and encapsulation, as mentioned above, the correspondent address may not be identically the source address of the packet itself, but is nevertheless contained in other IP layers or parts of the IP header. An example is collocated care-of-address Mobile IP (MOBILEIP), whose specifications clearly identify the correspondent node address, which in this case is the address of the PoC server 112.

The second method by which the Mobility Data Network 118, 120 determines the IP address of the sending PoC server from the PoC signaling is for the mobile station 104, 106 to inform the Mobile Data Network 118, 120 of the IP address of the PoC server 112 in the filter that recognizes the PoC signaling. This would, of course, require the mobile station 104, 106 to have, or be able to resolve, the IP address of its PoC server 112. In at least some PoC systems, the mobile station 104, 106 will not be permitted to acquire or resolve this IP address, but this method is included for the sake of completeness.

The third method by which the Mobility Data Network 118, 120 determines the IP address of the sending PoC server 112 from the PoC signaling relies on the PoC signaling message not being encrypted or compressed, and further assumes that the Mobility Data Network 118, 120 understands at least some of the PoC signaling parameters in the PoC signaling. In this case, the Mobility Data Network 118, 120 extracts the PoC server's IP address from the signaling message, or extracts indirect information from the PoC signaling that the Mobility Data Network 118, 120 can resolve to the PoC server IP address. In the practice of data networking art, this is sometimes referred to as a layering violation because the Mobility Data Network 118, 120 accesses protocol layers that are not properly in the purview of the Mobility Data Network 118, 120. Despite the terminology, layering violation is widely practiced in many data networking regimes. If the Mobility Data Network 118, 120 inspects these layers to determine the IP address of the PoC server 112 that sent the PoC signaling, it typically does not alter or modify these layers in any substantive way.

It will be appreciated by those skilled in the art, that if the PoC signaling message is encrypted and there are PoC Signaling Network intermediaries involved in the transfer of the PoC signaling, then the direct page-event indication-to-speak may not be applicable, and the indirect page-event indication-to-speak may be used instead.

The reason for the Mobility Data Network 118, 120 optionally copying the PoC signaling message that the Mobility Data Network filters recognized as the page-event indication-to-speak is to allow the PoC server 112 to inspect security credentials and make an absolute determination of the authenticity of the message when it receives the page-event indication-to-speak. If such security is not important, or such security may be achieved by means other than encryption of the PoC signaling itself, then it may be possible to include only parts of the PoC signaling message that the Mobility Data Network filters recognized as the page-event indication-to-speak, e.g., the IP address of the mobile station 104, 106.

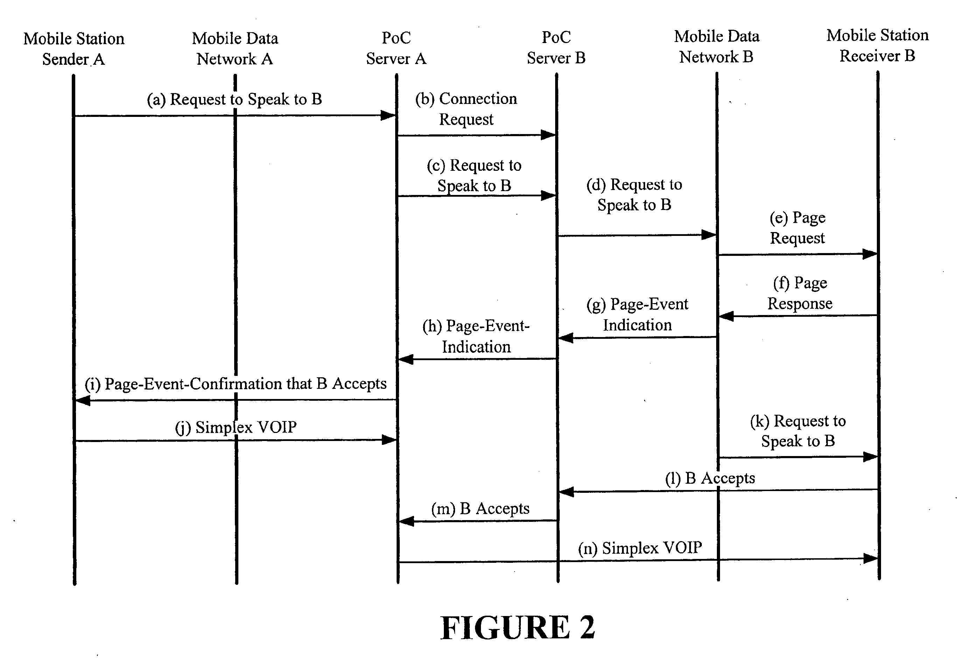

A typical scenario in which a direct page-event indication-to-speak may occur is depicted in Figure 2. To avoid unnecessarily obscuring the instant invention, the PoC Signaling Network 122 of Figure 1 is omitted from Figure 2. In this scenario it serves to transfer PoC Signaling between the Mobility Data Network 118, 120 and the PoC servers 112. This scenario is also based on the assumption that the wireless network does not possess knowledge that a PoC call cannot be established, nor does the mobile station possess the knowledge that it cannot support a PoC call. In addition, this scenario is also based on the assumption that neither the wireless network nor the mobile station acquires the knowledge during the scenario that they cannot support a PoC call.

Assume that the mobile stations 104, 106 have been previously assigned PoC Servers 112A and 112B, respectively. Assume that the mobile station 106 is dormant, and therefore, does not have an over-the-air connection to its Radio Network 114. Assume that the mobile station 104 (speaker) presses a button to speak. If the mobile station 104 is dormant, and therefore does not have an over-the-air connection to the wireless network, the mobile station 104 acquires a connection.

The Mobile station 104 sends a Request-to-Speak message to the PoC Server 112A via the over-the-air connection to its Radio Network 116, which forwards the message to PoC Server 112A via the Mobility Packet Data System and PoC Signaling Network 122. That request identifies the mobile station 106 and other information such as the type of codec the mobile station 104 desires to use for the call. In some call scenarios; codec information and other parameters may have previously been negotiated. The exact timing of that negotiation of such parameters of PoC calls is not relevant to this invention.

Upon receiving the PoC signaling request, PoC Server 112A determines that the PoC Server 112B supports the mobile station 106, and sends a Connection message to the PoC server 112B. Such a connection may be required in general PoC Wireless network environments. Those skilled in the art will appreciate that additional PoC Servers may be involved (collectively labeled "PoC Server 112C" in Figure 1) that act as intermediaries and perform additional PoC functions as the message progresses to the PoC Server 112B, also via the PoC Signaling Network. These additional PoC servers 112C do not affect this invention and are not reflected in the message flows of Figure 2.

The PoC Server 112A and the PoC Server 112B arrange a connection for media to be transferred between the mobile station 104 and the mobile station 106. In some embodiments of the instant invention, it may be useful to have all media flow to just one PoC server instead of through both PoC servers. The purpose of the Connection signaling message is to arrange for the correct media routing and distribution (and duplication) according to the prevailing policies of the wireless network. In addition, it is possible that the PoC servers 112A, 112B may delegate media duplication or other media processing to other entities not shown in Figure 2. Such delegation to other entities does not impact the invention described herein.

Having established the connection to the PoC Server 112B, the PoC Server 112A sends a "Request to Speak to the mobile station 106" message via the PoC Signaling Network 122 to the Mobility Data Network 118. The PoC Server 112B sends the "Request to Speak to mobile station 106" to the Mobility Data Network 118 of mobile station 106.

The Mobility Data Network 118 has filters that recognize the PoC signaling (i. e., the "Request to Speak to mobile station 106" message), as establishing or continuing a PoC call and makes a copy of this PoC signaling message. As stated above, this scenario assumes that the mobile station 106 is dormant. The Radio Network 114 sends a Page Message to the mobile station 106 to trigger a connection to the mobile station 106. The Mobility Data Network 118 is able to determine the IP address of the PoC server 112B. The mobile station 106 responds to the page with a Page Response. The mobile station 106 begins the process of establishing a connection to its Radio Network 114.

The Mobility Data Network 118 receives the page Response message from the mobile station 106, and sends a page-event indication-to-speak to the PoC server 112B. The page-event indication-to-speak has at least the IP address of the mobile station 106, but in one embodiment of this invention, the indication-to-speak has a copy of the entire "Request to Speak to the mobile station 106" message that triggered the Page Request to the mobile station 106. The PoC Server 112B identifies the PoC Server 112A for this call. The PoC Server 112B is able to identify the call for which the signaling applies because the PoC Server 112A is associated with the call identified with the page-event indication-to-speak. When the page-event indication-to-speak has the entire PoC signaling message recognized by the filter ("Request to Speak to the mobile station 106" in Figure 2), that will be sufficient to identify the call and therefore the PoC Server 112B. Alternatively, if the page-event indication-to-speak only contains the IP address of the mobile station 106, then that will very likely be sufficient to recognize the call, and therefore the PoC Server 112A, because in the practice of PoC signaling, there is only one request sent to a mobile station at a time. By definition, in PoC service, only one mobile station is permitted to speak at a time. The Wireless Network PoC service is expected to determine one and only one mobile station to speak at any given time to a given user or group of users, as are addressed in the PoC call request. Therefore, in PoC service, it generally does not happen that a mobile station receives requests pertaining to more than one mobile station, simultaneously.

The PoC Server 112B sends the page-event indication-to-speak to the PoC Server 112A. The PoC Server 112A sends a page-event confirmed indication-to-speak to the mobile station 104 that the mobile station 106 accepts the call. The user speaks into the mobile station 104, and the PoC Server 112A commences to buffer mobile station 104's media (speech).

Assume now that the mobile station 106 has now established an over-the-air connection or connections per the policies of the Radio Network of Figure 1, and the Mobility Data Network 118 sends the Request to Speak to the mobile station 106 message to the mobile station 106. If instead, the mobile station 106 had not been able to establish an over-the-air connection or connections, then the called user who is now speaking would need to be informed that the call failed. Also, as stated above, this scenario is based on the assumption that there is no information that would cause the wireless network or mobile to determine that a PoC cannot be established for some reason, e.g., the mobile is engaged in an activity that prevents it from supporting a PoC call. In the absence of such other reasons, the failure of the PoC call will typically happen due to different radio resources being implicated for the page-response mechanism than for the over-the-air connections and only rarely happens.

The mobile station 106 processes the PoC signaling and sends a "mobile station 106 Accepts" message to the PoC Server 112B, via its Mobility Data Network 118. The PoC Server 112B sends the "mobile station 106 Accepts" messages to the PoC Server 112B. The PoC Server 112A sends media (speech) to the mobile station 106 via the PoC server 112B and the Mobility Data Network 118.

In the foregoing scenario, two PoC Servers, namely the PoC server 112A and the PoC server 112B, support the PoC call. In an alternative embodiment of the instant invention, a single PoC server may be used to support both mobile stations. In this single PoC server mode of operation, the PoC server performs all the PoC server functions above, except there is no Connection Request message, as outlined above.

When there are more than two mobile stations, each with a PoC server, the mechanisms of the invention result in the calling mobile station's PoC server possibly receiving more than one page-event indication-to-speak message. In the case of such multiple page-event indications-to-speak, the calling PoC server provides the calling mobile station with the page-event confirmed indication-to-speak message upon arrival of the first page-event indication-to-speak from any PoC server involved in the call. The other indications require no further action.

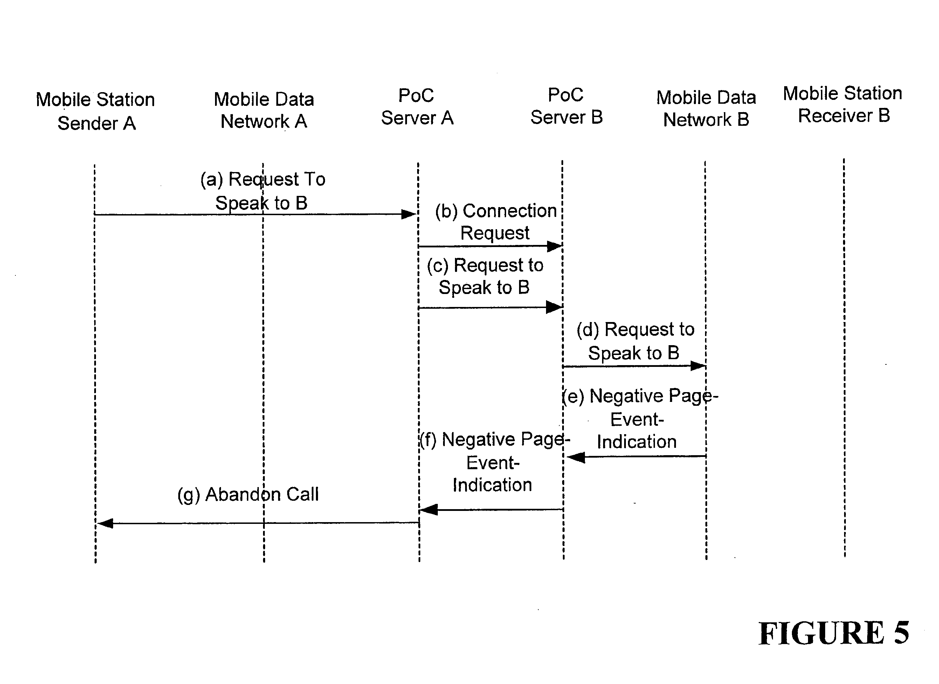

A typical scenario in which a direct *negative* page-event indication-to-speak may occur is depicted in Figure 5. To avoid unnecessarily obscuring the instant invention, the Signaling Network 122 of Figure 1 is omitted from Figure 5. This scenario is based on the assumption that the wireless network possesses knowledge that a PoC call cannot be established, or that the wireless network acquires the knowledge during the scenario and before the page to the mobile that the PoC call cannot be established.

Assume again the Mobility Data Network 118 has filters that recognize the PoC signaling (i.e., the "Request to Speak to mobile station 106" message) as establishing or continuing a PoC call and makes a copy of this PoC signaling message. As in the previous scenario associated with Figure 2, assume that the mobile station 106 is dormant. The first four steps are the same as in the previous scenario, (i.e., the "Request to Speak to mobile station 106" message from mobile A to PoC Server 112A, a Connection Request to PoC Server 112B, "Request to Speak to mobile station 106" from PoC server 112A to PoC Server 112B, and from PoC Server 112B to Mobile Data Network 118).

If the Radio Network 114 possesses knowledge that it will not be possible to establish a PoC call to the mobile station due to insufficient radio resources, or because the mobile station is engaged in other activities and cannot support a PoC simultaneously, Mobile Data Network 118 sends a negative page-event indication to PoC Server 112B, which similarly sends the negative page-event indication to PoC Server 112A. As in the scenario of Figure 2, that indication may carry a copy of the "Request to Speak to Mobile 106" to assist the PoC Servers in identification of the mobile station and PoC call, as well as verification of the authenticity of the negative page-event indication. The PoC Server 112A indicates to mobile station 104 that it should abandon the call.

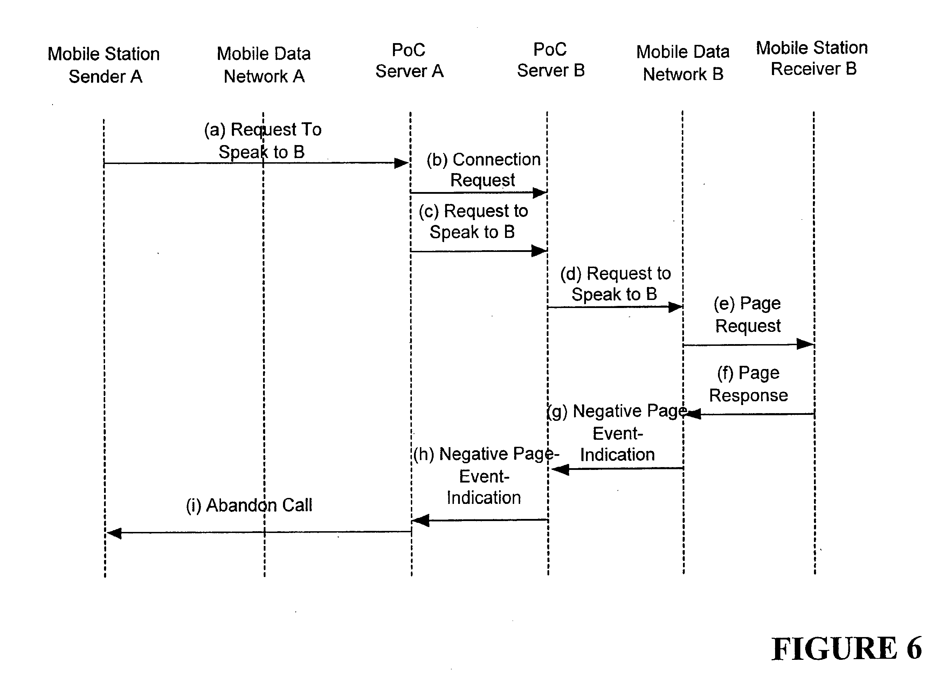

It may happen that the wireless network will not acquire the knowledge that the PoC cannot be established until it learns the location of the mobile station when the mobile station responds to a page. Figure 6 shows the Mobile Data Network 118 sending a page to mobile station 106. Other steps leading up to the Page Request from the RAN 114 to the mobile station 106 are substantially similar to Figure 5.

Upon receiving a page response, the Mobile Data Network 118 determines that a PoC call cannot be established due to radio or system resources. Or, similarly, the mobile station 106 is able to determine that a Page Request applies to a PoC call by means outside the scope of this document, and replies with a Page Response that also conveys a negative indication by means outside the scope of this document regarding its inability to establish or otherwise accept a PoC call. Upon either of these events, the Mobile Data Network 118 sends a negative page-event to the PoC Server 112B, which the PoC Server 112B then conveys to the PoC Server 112A, which alerts the user to abandon the PoC call.

It may also happen that the RAN 114 sends a page to the mobile station, but does not receive a page response within a time duration commensurate within usual radio field guidelines. Again, the Mobile Data Network 118 sends a negative page-event to the PoC Server 112B, which the PoC Server 112B then conveys to the PoC Server 112A, which alerts the user to abandon the PoC call.

As explained above, it may be that the Mobility Data network 118 of the called mobile station is unable to determine the IP address of the PoC server that supports the calling mobile station. For wireless networks such as this, the indirect page-event indication-to-speak discussed above is applicable.

This section illustrates an alternative embodiment of the indirect page-event indication-to-speak using a wireless network based presence service. This embodiment of the invention uses the following assumptions regarding a Presence Service of the Wireless network of Figure 1. The Mobility Data Network 118, 120 is able to generate presence notifications when the user's mobile station 104, 106 receives an IP address or a Mobile IP care-of-address (sometimes referred to as an "IP address acquisition" event). This includes both Foreign Agent (FA) and Collocated Care-of Address (CoA) acquisitions. For Mobile IP, the IP address often seen is actually coming from a Home Agent, which is not involved with paging, and therefore, also not involved with page-event notifications.

The Mobility Data Network 118, 120 sends these presence notifications to the called mobile station's Presence Server 124 of Figure 1. This notification alerts the Presence Server 124 that the mobile station 104, 106 has packet data service capability, *i*.*e*., that it has the ability to send and receive IP packets. This type of event will be commonly deployed in 3G wireless networks. In accordance with usual practices of generating presence notifications, the presence notification contains an abstract presence identifier that identifies the network presence functionality of the Mobility Data Network 118, 120

The PoC server 112 of the mobile station 104, 106 is able subscribe to events for the mobile station; in particular, the PoC server 112 subscribes for "page-events" notifications associated with the page-events of the invention herein.

The mobile station 104, 106 or network operation is able to create filters in the Mobility Data Network 118, 120 that generate a page-event notification upon reception of a packet recognized by the filter. The Mobile Data Network 118, 120 sends these presence notifications to the Presence Server 124 of the mobile station. In one embodiment of this invention, the page-event notification contains a copy of the PoC signaling message that the filter recognized. At a minimum the notification contains the IP address of the mobile station.

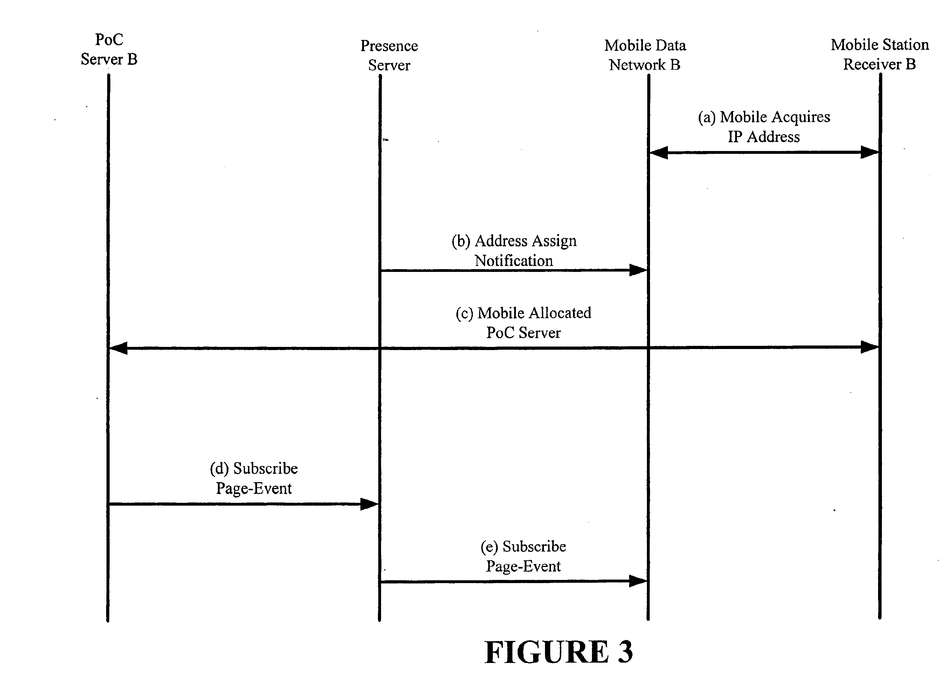

Based on the above assumptions, the indirect page-event indication mode of this invention operates by the PoC Server 112 of the called mobile station subscribing for page-event notifications. Turning now to Figure 3, the mobile station 104 acquires an IP address and/or Mobile IP care-of-address. The Mobility Data Network 120 sends a Presence Notification to the Presence Server 124 of the mobile station. This notification contains a presence identity associated with the Mobility Data Network 120 of the mobile station 104. The mobile station 104 is allocated the PoC Server 112A and establishes PoC service. This likely includes authentication and authorization of the mobile station 104 to receive PoC service. Shortly thereafter, in some PoC systems, the mobile station 104 may negotiate certain parameters for calls to be placed later.

The PoC Server 112A subscribes for Page-Event notifications by sending a Subscribe Page-Event message to the Presence Server 124 of the mobile station. The Presence Server 124 subscribes for Page-Event notifications by sending a Subscribe Page-Event message to the Mobility Data Network 120 that supports the mobile station 104. The Presence Server 124 uses the presence identity of the above-identified notification of this scenario to address the presence entity within the Mobility Data Network 120 with the subscription.

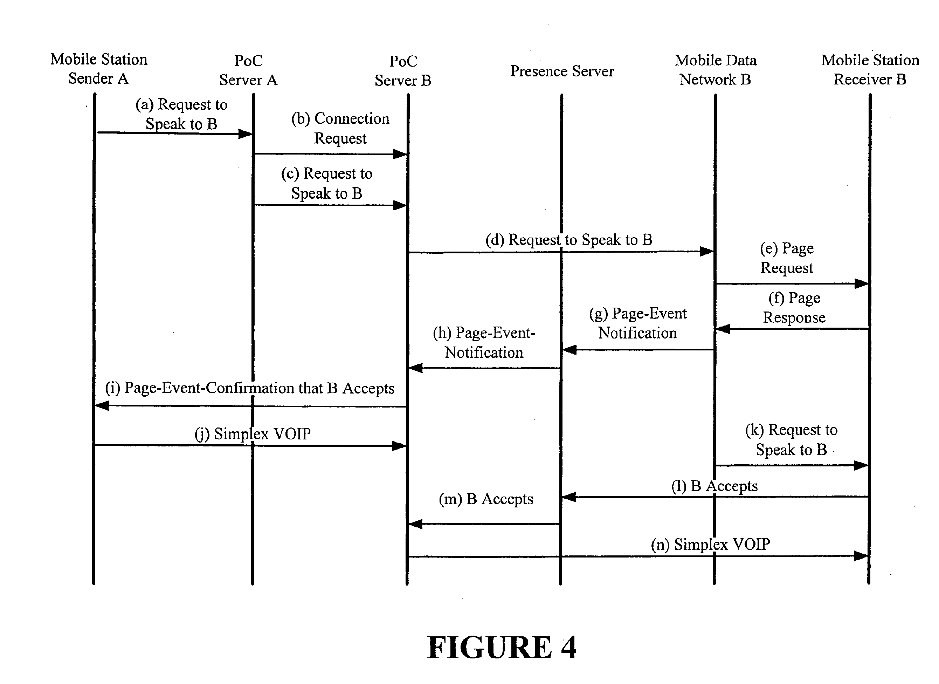

At this point in time, there is no further activity until the mobile station 104 of Figure 4, calls the mobile station 106. This may be immediately after the scenario of Figure 3 completes, or much later. However, if too much time elapses, some or all of the messages of Figure 3 should be repeated to avoid expiration of subscriptions.

Figure 4 depicts the steps of the indirect page-event indication-to-speak operation. Assume that the mobile station 104 has also been previously assigned the PoC Server 112A. To avoid unnecessarily obscuring the instant invention, this scenario omits the PoC Signaling Network 122 and Mobility Data Network 120 of the mobile station 104, both of which are depicted in Figure 1. The Mobility Data Network 118 of mobile station 106 only serves to transfer packets to and from the mobile station 104. Where the operation of the PoC Signaling Network 122 impacts the scenario, note is made in the following text.

Assume that the mobile station 106 does not have a connection to its Radio Network 114. Assume that the mobile station 104 (speaker) presses a button to speak. If the mobile station 104 does not have a connection to the wireless network, it acquires a connection.

This section makes the same general assumption as the scenario discussed above in Figure 2. However, where there are substantial differences, they are elaborated upon. This scenario is also based on the assumption that the wireless network does not possess knowledge that a PoC call cannot be established, nor does the mobile station possess the knowledge that it cannot support a PoC call. In addition, this scenario is also based on the assumption that neither the wireless network nor the mobile station acquires the knowledge during the scenario that they cannot support a PoC call.

The mobile station 104 sends a Request-to-Speak message to the PoC Server 112A via the over-the air connection to its Radio Network 116, which forwards the message to the PoC Server 112A via the Mobility Data Network 120 and PoC Signaling Network 122. Upon receiving the PoC signaling request, the PoC Server 112A determines that the PoC Server 112B supports the mobile station 106, and sends a Connection message to the PoC server 112B. Having established the connection to the PoC Server 112B, the PoC Server 112A sends a Request-to-speak message from mobile station 104 to the PoC Signaling Network 122, to the Mobility Data Network 118, and on to the mobile station 106. The Radio Network 114 sends a Page Request message to the mobile station 106 to trigger a connection to the mobile station 106. The Mobility Data Network 118, by assumption, is *not* able to determine the IP address of the PoC server 112B. The mobile station 106 responds to the Page Request with a Page Response message. The Mobile station 106 begins to establish a connection to its Radio Network 114 in this step. The Mobility Data Network 118 receives the Page Response message, and sends a Page-Event Notification-to-speak to the Presence Server 124 of the mobile station 106, which had previously subscribed for such notifications (see discussion above). That notification has at least the IP address of mobile station 106, but in the illustrated embodiment of this invention, has a copy of the entire Request-to-Speak to the mobile station 106 message that caused the Page Request.

The Presence Server 124 sends the Page-Event Notification-to-speak to the PoC Server 112B, which has previously registered for such notification. The PoC Server 112B receives the notification sent by the Presence Server 124, and identifies the PoC server 112A for this call. The PoC Server 112B is able to identify the call, and therefore, the PoC Server 112A for which the signaling applies. This assumes the call can be identified based on the Page-Event Notification-to-speak. When the Page-Event Notification-to-speak has the entire PoC signaling message recognized by the filter (i.e., the "Request to Speak to the mobile station 106" in Figure 4), that will ordinarily be sufficient to determine the exact call, and therefore the PoC server 112B. If the page-event notification-to-speak only contains the IP address of the mobile station, then that will very likely be sufficient to recognize the call, and therefore the PoC Server 112A, because, as discussed above, in the practice of PoC signaling, there is only one request permitted to be sent to the mobile station at a time.

The PoC Server 112B sends a page-event indication-to-speak to the PoC Server 112A. The PoC Server 112A sends a page-event confirmed indication-to-speak to the mobile station 104 that the mobile station 106 accepts the call. The user speaks into mobile station 104, and the PoC Server 112A commences to buffer media (speech) received from the mobile station 104.

The mobile station 106 has now established an over-the-air connection, and the Mobility Data Network 118 sends the "Request to Speak to the mobile station 106" message to the mobile station 106. The mobile station 106 processes the PoC signaling and sends a "Mobile station 106 Accepts" message to its PoC Server 112B, via its Mobility Data Network 118. The PoC Server 112B sends the "Mobile station 106 Accepts" message to the PoC Server 112B. The PoC Server 112A sends media (speech) to the mobile station 106 via the PoC server 112B and the Mobility Data Network 118.

In the foregoing scenario, two PoC Servers, namely the PoC Server 112A and the PoC Server 112B, support the call. When the same PoC server supports both mobile stations 104, 106, that PoC server performs the functions above, except there is no connection message between the two PoC servers.

When there are more than two mobile stations, each with a PoC server, the above mechanisms of the invention result in the calling mobile station's PoC server possibly receiving more than one page-event indication-to-speak message. That is, the PoC server of the calling mobile may receive a page-event indication-to-speak via the called mobile station's PoC Server, which in turned received a page-event notification-to-speak from the Presence Server of each mobile station. In the case of multiple such page-event indications-to-speak, as in the case of the direct page-event mode of the invention described above, the calling PoC server provides the calling mobile station with the page-event confirmed indication-to-speak message upon arrival of the first page-event indication-to-speak from any called PoC server involved in the call. The other indications require no further action.

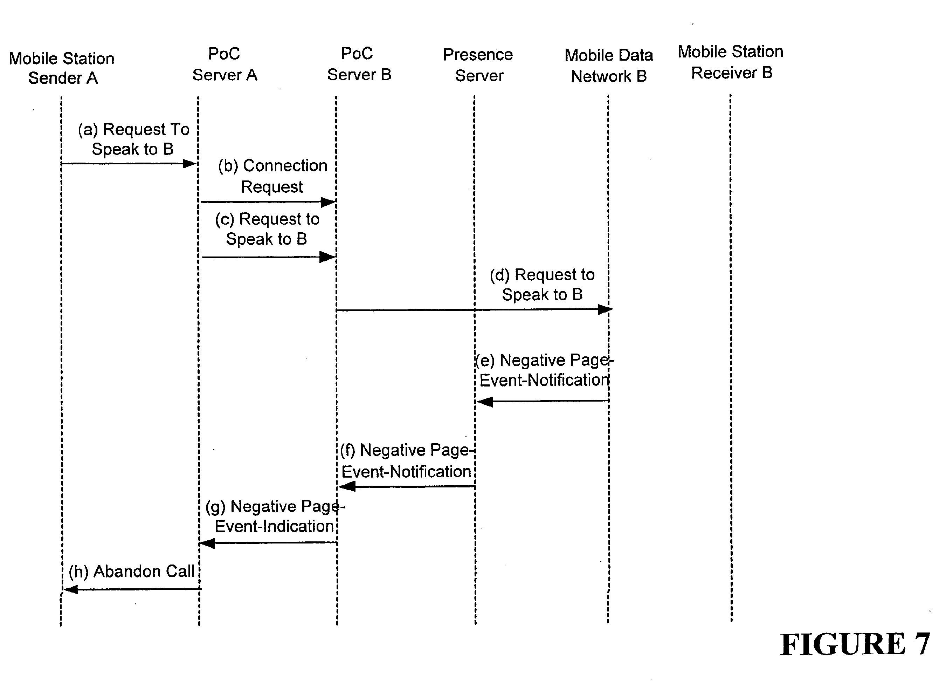

A typical scenario in which an indirect negative page-event indication-to-speak may occur is depicted in Figure 7. To avoid unnecessarily obscuring the instant invention, the PoC Signaling Network 122 of Figure 1 is omitted from Figure 7.

Assume that the subscriptions of Figure 3 have occurred as described above and that the Mobility Data Network 118 has filters that recognize the PoC signaling (i. e., the "Request to Speak to mobile station 106" message), as establishing or continuing a PoC call. As in the scenario associated with Figure 4, assume that the mobile station 106 is dormant. The first four steps are the same as in the scenario of Figure 4, *(i. e.,* the "Request to Speak to the mobile station 106" message from the mobile station 104 to the PoC Server 112A, a Connection Request from the PoC Server 112A to the PoC Server 112B, a "Request to Speak to the mobile station 106", from the PoC Server 112A to the PoC Server 112B, and a "Request to Speak to the mobile station 106" from the PoC Server 112B to the Mobile Data Network 118").

Upon receiving the "Request to Speak to the mobile station 106" the Mobile Data Network 118 determines that the PoC call is for the mobile station 106. The Radio Network 114 possesses the knowledge that it will not be possible to establish a PoC call to the mobile station 106 due to insufficient radio resources, or because the mobile station 106 is engaged in other activities and cannot support a PoC call simultaneously. The Mobile Data Network 118 creates and sends a negative page-event notification-to-speak to the Presence Server 124, as shown in Figure 7. In Figure 7, the Presence Server 124 sends the negative page-event notification to the PoC Server 112B. The PoC Server 112B receives the notification sent by the Presence Server 124, and identifies the PoC server 112A for this call. The PoC Server 112B is able to identify the call, and therefore, the PoC Server 112A for which the signaling applies. This assumes the call can be identified based on the negative page-event notification-to-speak. When the negative page-event notification-to-speak has the entire PoC signaling message recognized by the filter (i.e., the "Request to Speak to the mobile station 106" in Figure 7), which will ordinarily be sufficient to determine the exact call, and therefore the PoC server 112B. If the negative page-event notification only contains the IP address of the mobile station, then that will very likely be sufficient to recognize the call, and therefore the PoC Server 112A, because, as discussed above, in the practice of PoC signaling, there is only one request permitted to be sent to the mobile station at a time. The PoC Server 112B sends a page-event indication-to-speak to the PoC Server 112A. The PoC Server 112A sends a negative page-event confirmed indication-to-speak to the mobile station 104 to abandon the call, and the user abandons the call.

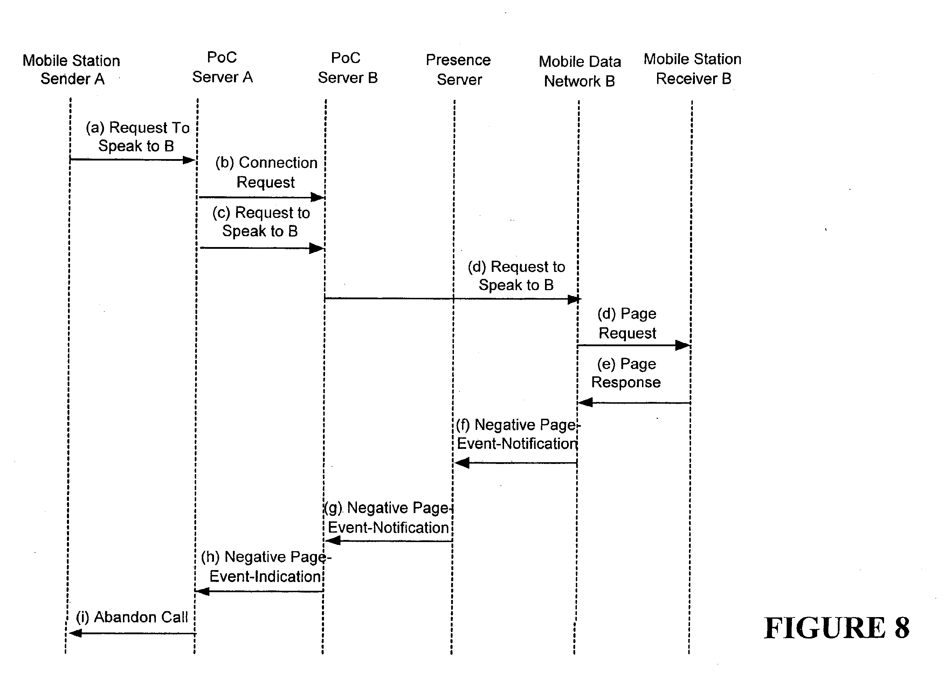

It may happen that the Mobile Data Network 118 will not acquire the knowledge that the PoC call to the mobile station 106 cannot be established until it learns the exact location of the mobile station 106 when the mobile station 106 responds to the page request. Figure 8 shows the Mobile Data Network 118 sending a page request to the mobile station 104, 106.

Other steps leading up to, but not including the page request to the mobile station 106 are substantially similar to those illustrated and discussed with respect to Figure 7. The Mobile Data Network 118 sends a page request to the mobile station 106. Upon receiving a page response, the Mobile Data Network 118 determines a PoC call cannot be established due to radio or system resources, or possibly yet other reasons. Or, similarly, the mobile station 106 is able to determine that a page request applies to a PoC call by means outside the scope of this document, and replies with a page response by a means outside the scope of this document that conveys a negative indication regarding its inability to establish or otherwise accept a PoC call. Upon either of these events, the Mobile Data Network 118 sends a negative page-event notification-to-speak to Presence Server 124, which in turn sends a negative page-event notification-to-speak to the PoC Server 112B, which the PoC Server 112B then conveys to PoC Server 112A via a negative page-event confirmed indication-to-speak that alerts the user to abandon the PoC call.

It may also happen that the RAN 114 sends a page to the mobile station, but does not receive a page response within a time duration commensurate within usual radio field engineering guidelines. Again, the Mobile Data Network 118 sends a negative page-event notification-to-speak to the Presence Server 124, which in turn sends a negative page-event notification-to-speak to the PoC Server 112B, which the PoC Server 112B then conveys to PoC Server 112A via a negative page-event confirmed indication-to-speak that alerts the user to abandon the PoC call.

Those skilled in the art will appreciate that the various system layers, routines, or modules illustrated in the various embodiments herein may be executable control units (such as Mobility Routing Networks 108, 110, or the PoC Signaling Network 122 (see Figure 1)). The control units may include a microprocessor, a microcontroller, a digital signal processor, a processor card (including one or more microprocessors or controllers), or other control or computing devices. The storage devices referred to in this discussion may include one or more machine-readable storage media for storing data and instructions. The storage media may include different forms of memory including semiconductor memory devices such as dynamic or static random access memories (DRAMs or SRAMs), erasable and programmable read-only memories (EPROMs), electrically erasable and programmable read-only memories (EEPROMs) and flash memories; magnetic disks such as fixed, floppy, removable disks; other magnetic media including tape; and optical media such as compact disks (CDs) or digital video disks (DVDs). Instructions that make up the various software layers, routines, or modules in the various systems may be stored in respective storage devices. The instructions when executed by a respective control unit causes the corresponding system to perform programmed acts.

The particular embodiments disclosed above are illustrative only, as the invention may be modified and practiced in different but equivalent manners apparent to those skilled in the art having the benefit of the teachings herein. Furthermore, no limitations are intended to the details of construction or design herein shown, other than as described in the claims below. It is therefore evident that the particular embodiments disclosed above may be altered or modified and all such variations are considered within the scope and spirit of the invention. Accordingly, the protection sought herein is as set forth in the claims below.

## Claims

1. A method of communication with a first wireless unit, the method comprising:
receiving a request from a second wireless unit to transmit a message to the first wireless unit; and
providing a negative indication-to-speak to the second wireless unit in response to determining that the first wireless unit is unable to receive the message.

2. A method, as set forth in claim 1, wherein providing the negative indication-to-speak to the second wireless unit in response to determining that the first wireless unit is unable to receive the message further comprises:
paging the first wireless unit in response to receiving the request from the second wireless unit to transmit a message to the first wireless unit;
receiving a page response signal from the first wireless unit; and
providing the negative indication-to-speak to the second wireless unit in response to receiving the page response signal.

3. A method, as set forth in claim 2, wherein paging the first wireless unit in response to receiving the request from the second wireless unit to transmit a message to the first wireless unit further comprises paging the first wireless unit in response to receiving a request from the second wireless unit to transmit a PoC message to the first wireless unit.

4. A method, as set forth in claim 2, wherein paging the first wireless unit in response to receiving the request from the second wireless unit to transmit the message to the first wireless unit further comprises paging the first wireless unit in response to receiving a request-to-speak from the second wireless unit to transmit a voice message to the first wireless unit.

5. A method, as set forth in claim 1, wherein determining that the first wireless unit is unable to receive the message further comprises determining, prior to contacting the first wireless unit in response to receiving the request from the second wireless unit to transmit a message to the first wireless unit, that the first wireless unit is unable to receive the message.

6. A method, as set forth in claim 1, wherein determining that the first wireless unit is unable to receive the message further comprises determining that the first wireless unit is currently providing a service that prevents the first wireless unit from receiving the message.

7. A method, as set forth in claim 1, wherein determining that the first wireless unit is unable to receive the message further comprises determining that insufficient resources are available to allow the message to be sent to the first wireless unit.

8. A method, as set forth in claim 1, wherein determining that the first wireless unit is unable to receive the message further comprises determining that the wireless unit does not possess resources capable of receiving the message.

9. A method of communicating with a first wireless unit comprising:
delivering a request to transmit a message to the first wireless unit; and
receiving a negative page-event indication-to-speak.

10. A method, as set forth in claim 9, wherein delivering the request to transmit the message to the first wireless unit further comprises delivering a request to transmit a PoC message to the first wireless unit.
